# EUROPEAN PATENT APPLICATION

(11) **EP 4 834 809 A1**
(43) Date of publication of application: **04.11.2026**
(21) Application number: 25305609.7
(22) Date of filing: 29.04.2025
(51) Int. Cl.: B65G 54/02

(54) **LINEAR MOTOR SYSTEM**

(71) Applicant: SCHNEIDER ELECTRIC INDUSTRIES SAS, 92500 Rueil-Malmaison (FR)
(72) Inventor: HEBIG, Simon, 97282 Retzstadt (DE)
(74) Representative: Manitz Finsterwald Patent- und Rechtsanwaltspartnerschaft mbB

(57) **Abstract**

A linear motor system (10), comprises a guide track (16) comprising a plurality of electromagnets (22) distributed along the guide track (16) and at least one carrier (14) movable along the guide track (16), which comprises a carrier body (15), a drive magnet (20) attached to the carrier body (15) for cooperating with the electromagnets (22) of the guide track (16), at least a guiding element (25a, 25b) for mechanically guiding the carrier (14) along the guide track (16), the guiding element (25a, 25b) comprising a roller shaft (27) and a guide roller (24) rotatably attached to the roller shaft (27), and an insert (40) for attaching the guiding element (25) to a corresponding insert seat (29) provided in the carrier body (15), the insert (40) comprising an elastic element (41) for engaging the insert seat (29) and an insert fastener (42) for fixing the roller shaft (27) to the insert (40).

## Description

The present invention relates to a linear motor system, in particular to a transport system, e.g. a multi-carrier, comprising: a guide track having a plurality of electromagnets arranged distributed along the guide track; at least one carrier that is guided by and movable along the guide track and that comprises a drive magnet for cooperating with the electromagnets of the guide track to move the carrier.

Linear motors are widely used and can, for example, be used to move products in industrial plants, in particular to transport them from one location to another location inside an industrial plant. Multi-carriers are particularly advantageous for the flexible transport of the most varied products. They in particular comprise a plurality of carriers, that is transport units, that can be moved individually and independently of one another.

Typically, the carrier comprises rolling elements contacting the guide tracks for guiding the movement of the carrier along the guide track. Due to the magnetic force between the carrier and the guide track an attraction force between the rolling elements and the guide track is generated, which is directed transversally to the movement of the carrier along guide track. The magnetic force pushes the rolling elements against the guiding track. Due to mechanical tolerances, contact between the rolling surfaces of at least one of the rolling elements and the corresponding stationary surface of the guiding tracks may be temporarily lost during operation, causing the carrier to tilt or vibrate or causing excessive loads on the carrier and the guide track. Such tilting, vibrations or excessive loads may cause undesirable irregularities in the movement of the carrier along the guide tracks, undesirable noise or an excessive wear of the conjugated surfaces.

It is an object of the invention to provide a linear motor system including at least a carrier and a carrier for a linear motor system, which can overcome the above described inconveniences.

This object is achieved by a linear motor system and a carrier in accordance with the attached independent claims. The linear motor system comprises a guide track comprising a plurality of electromagnets distributed along the guide track and at least one carrier movable along the guide track. The carrier comprises a carrier body, a drive magnet attached to the carrier body for cooperating with the electromagnets of the guide track to move the carrier along the guide track, at least a guiding element for mechanically guiding the carrier along the guide track, the guiding element comprising a roller shaft and a guide roller rotatably attached to the roller shaft. The carrier further comprises an insert for attaching the guiding element to a corresponding insert seat provided in the carrier body, the insert comprising an elastic element for engaging the insert seat and an insert fastener for fixing the roller shaft to the insert.

The roller shaft provides a support for the rotation of the guide roller and also an interface for attaching the guiding element to the carrier body such that the guide roller is susceptible to lie against the guide track, in particular against a corresponding conjugate surface provided on the guide track. Such conjugate surface of the guide track may be, for example, a guide rail on which the guide roller rotates. The insert is interposed between the roller shaft and a corresponding insert seat provided in the carrier body. The insert provides an elastic coupling between the guiding element and the carrier body, allowing a dampening of the vibrations of the guide roller, in particular in direction transverse to the movement of the carrier along the guide track. This compensates for the mechanical inaccuracies of the contact between the guide roller and the guide track and permits to eliminate or reduce irregularities in the movement of the carrier along the guide tracks, undesirable noise or an excessive wear of the guiding element or the guide track. Advantageously, the present invention provides that an insert is interposed between the roller shaft and the corresponding insert seat so that the roller shaft engages only the insert and not the carrier body or the guide track. The insert alone provides the contact between the guiding element and the carrier body, while the guide roller alone provides the contact between the carrier and guide track. Vibrations of the carrier, in particular high frequency vibration, are reduced or prevented. Excessive loads on the carrier and on the guide track are also reduced or prevented. This ensures precise positioning and regularity of movement of the carrier along the guide track.

According to the present invention, as a result of the magnetic attraction force between the carrier and the guide track, the elastic element can be deformed. The elastic element is than able to return to its original configuration, at least partially, if the geometry of the contact between the guide roller and the guide track allows it. In this way, the movement of the guide roller on the guide track is damped and, consequently, tilting or vibrations of the carrier are reduced or prevented.

According to embodiments of the present invention, the elastic element is configured in such a way that a maximum deflection in use of the elastic element is less than 0,05 mm, preferably less than 0,02 mm. The elastic element is preferably configured in such a way that a maximum deflection in use of the elastic element is more than 0,005 mm. According to an embodiment, the elastic element is configured in such a way that a maximum deflection in use of the elastic element is more than 0,01 mm. With the term "in use" it is meant that the specified deflections are to be measured with the carrier coupled to the guide track and with a load applied to the carrier corresponding to the normal conditions of use, for example corresponding to the weight of the carrier itself and of a product supported thereon. This amount of deflection (e.g. the amount of movement of the roller shaft within the elastic element) provides the required damping effect, without compromising the precise positioning and the regularity of the movement of the carrier along the guide track. In "use", the magnetic force holding the carrier to a linear motor can be distributed between the plurality of guiding elements and can have values that are comprised between 300 N and 450 N, e.g. 380 N. The magnetic force can be generated between electromagnets of a linear motor and a permanent magnet of the carrier.

According to embodiments of the present invention, the elastic element comprises an elastomeric material or other similar materials having elastic or elastoplastic properties, for example natural or synthetic rubber. Preferably, such materials have a Shore A hardness comprised between 30 and 100, more preferably between 40 and 80. According to other embodiments of the present invention, the elastic element may comprise other material having lower elastic properties, for example a metal configured as a spring.

The insert fastener of the insert provides an interface for attaching the guiding element to the insert. According to embodiments of the present invention, the insert fastener is provided as an inner portion of the insert and the elastic element is provided as an outer portion of the insert. For example, the insert may be provided as a cylindrical element having an inner metallic core, where the insert fastener is provided, the inner metallic core having an outer surface to which the elastic element is attached. Alternatively, the insert may be provided as a one-piece elastomeric element, having an inner portion where the insert fastener is provided and an outer surface which is subject to coupling with the insert seat on the carrier body.

According to embodiments of the present invention, the attachment between the guiding element to the insert is obtained by providing respective mutually engageable thread surfaces on the insert fastener and the roller shaft. For example, the insert fastener may be provided as a metal barrel nut coupling with a screw provided at an axial end of the roller shaft. Alternatively, in embodiment where the insert is provided as a one-piece elastomeric element, the insert fastener is provided as a central inner portion having a threaded hole coupling with a screw provided at an axial end of the roller shaft.

According to other embodiments of the present invention, the attachment between the guiding element to the insert is obtained by providing other types of respective mutually engageable surfaces on the insert fastener and the roller shaft. For example, a snap-fit connection may be provided between the insert fastener and the roller shaft. The thread surface or other engageable surface provided on the roller shaft is configured to be completed received in the insert fastener. This ensures that the roller shaft does not contact the carrier body and the insert alone provides the contact between the guiding element and the carrier body.

The insert seat provides an interface on the carrier body for attaching the insert to the carrier. According to embodiments of the present invention, the insert seat is provided as a hole in the carrier body, for example as a blind hole. The elastic element may be pressed with interference inside the insert seat. The blind hole provides a plurality of surfaces for engaging the elastic element of the guiding element, i.e., a lateral surface and/or a bottom surface. This may further improve the damping effect provided by the insert.

According to embodiments of the present invention, the insert seat extends along a seat axis, which is aligned with a rotation axis of the guide roller. Such an alignment between the seat axis with the rotation axis of the guide roller, with the insert interposed between the insert seat and the guiding element, may further improve the damping effect provided by the insert.

According to embodiments of the present invention, the carrier comprises a plurality of guiding elements. Only a portion of the plurality of guiding elements may be attached to the carrier body by means of an insert attached to an insert seat provided in the carrier body, as above described. For example, only a half or less than the plurality of guiding elements is attached to the carrier body by means of an insert attached to an insert seat provided in the carrier body, as above described. In particular, only two of the plurality of guiding elements is attached to the carrier body by means of an insert attached to an insert seat, while two or more of the plurality of guiding elements is directly attached to the carrier body without any insert as above described interposed between the guiding element and the carrier body. According to embodiments of the present invention, at least a guiding element is directly attached to the carrier body, the carrier body comprises a corresponding shaft seat, the shaft seat comprising a respective body fastener for fixing the roller shaft of a corresponding guiding elements directly to the carrier body. The body fastener may be integral to the carrier body, for example provided as a threaded hole in the carrier body for coupling with the screw provided at the axial end of the roller shaft.

The guide track longitudinally extends along a guide axis and the carrier mainly extends transversally to the guide axis between a first carrier end and a second carrier end. According to embodiments of the present invention, the carrier includes a pair of insert seats provided at one of the first carrier end and the second carrier end and a pair of shaft seats provided at the other of the first carrier end and the second carrier end. In operation, the guide axis may be oriented horizontally or almost horizontally. In such embodiment, the pair of insert seats are positioned above the pair of shaft seats, so that the insert are provided at the carrier end which is above with respect to the other carrier end.

According to embodiments of the present invention, one or more of the guide rollers may be movable along the rotation axis with respect to the respective roller shaft. This permits to adjust the position of the rollers with respect to the guide track. In embodiments where a portion of the plurality of guiding elements are directly attached to the carrier body without any insert, only such insert is provided with movable guide rollers. In one embodiment of the present invention, a first pair of guiding elements are positioned at the first end of the carrier and a second pair of guiding elements are positioned at the second end of the carrier insert seats, the first end being positioned in operation above the second end. The first pair of guiding elements are attached to respective insert seats of the carrier body, i.e., by means of a respective insert having an elastic element, and the second first pair of guiding elements are attached to respective shaft seats of the carrier body, i.e., directly, without a respective insert having an elastic element. The first pair of guiding elements are provided with guide roller that are not movable along the respective rotation axis, while the second pair of guiding elements are provided with guide roller that are movable along the respective rotation axis.

The invention will be described in the following only by way of example with reference to the Figures which schematically show the following:
Fig. 1 shows a linear motor system configured as a transport system including one carrier;
Fig. 2 shows a curve portion of the transport system of Fig. 1;
Fig. 3 shows a linear portion of the transport system of Fig. 1 parallel to a guide track of the transport system;
Fig. 4 shows a cross-section of the carrier in Fig. 1 with a sectional plane perpendicular to the guide track;
Fig. 5 shows a magnified view of the detail V of Fig. 4;
Fig. 6 shows a component of the carrier of Figs. 4 and 5.

Corresponding elements are characterized by the same reference numerals in the figures.

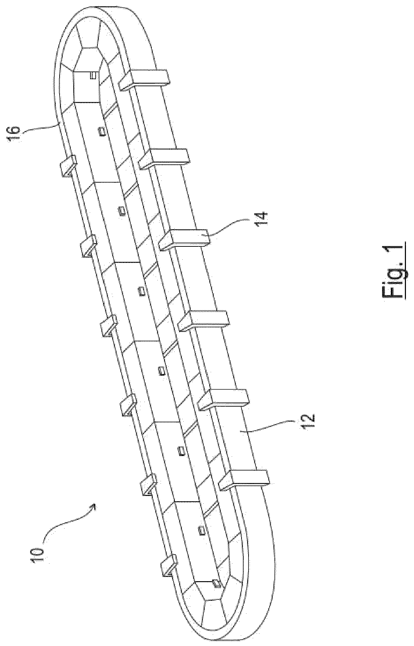

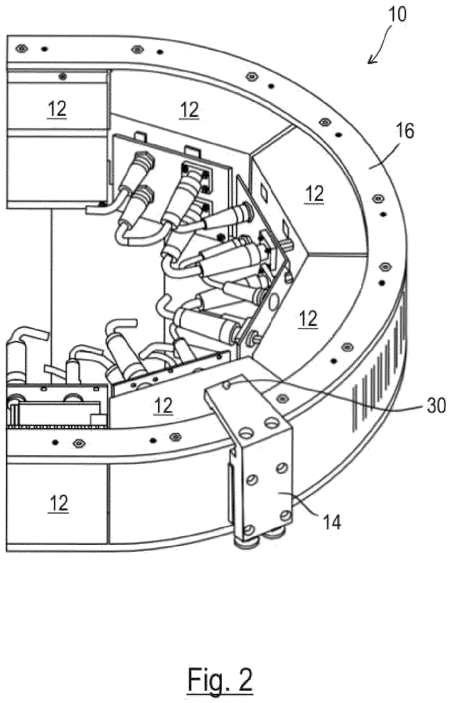

A transport system 10 according to the invention, which is configured as a multi-carrier system, is shown in figs. 1 and 2. The transport system 10 comprises a plurality of linear motors 12 that are arranged in rows such that a continuous and in this case revolving movement of the carriers 14 along a guide track 16 is made possible. The linear motors 12 are arranged in a closed circuit comprising two parallel linear sections connected to each other by two curved sections. According to other embodiments (not shown), the linear motors 12 are arranged in an open circuit. Fig. 2 shows a curve section of the transport system 10 in an enlarged view. The transport system 10 further comprises a plurality of carriers 14 that form individual transport elements of the transport system 10 and that can be moved along the guide track 16, in particular independently of one another, by means of the linear motors 12. Only one carrier 14 is shown, which is mountable in the linear motor system 10 such that the carrier 14 is movable along the guide track 16, namely via the linear motors 12. The transport system 10 furthermore comprises a control device that is configured to control the electromagnets 20 in a targeted manner in order to move the carrier 14 along the guide track 16. The control device is not a specific object of the present invention and therefore not described in further detail.

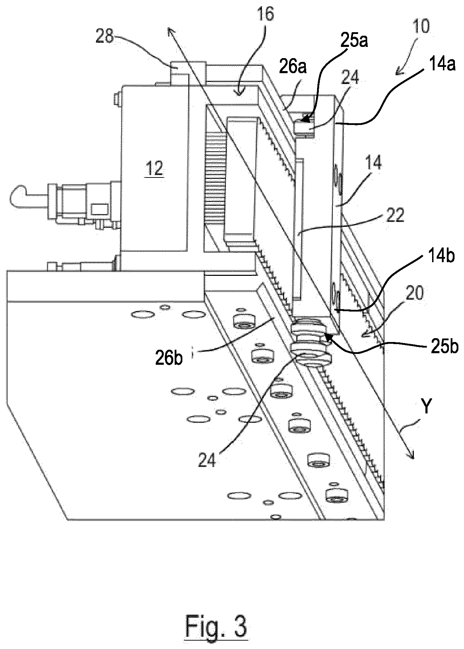

In fig. 3, the transport system 10 is shown in a sectional view and enlarged. A carrier 14 is visible that is movably guided at the guide track 16. In this respect, the carrier 14 is movable along a guide axis Y or a movement axis. For a movement along the guide axis Y, the carrier 14 is controlled by a plurality of electromagnets 20 that are arranged at the guide track 16 and that are uniformly distributed along it. The electromagnets 20 in this respect cooperate with a permanent magnet 22, which is arranged at the carrier 14 and which can also be designated as a drive magnet, for driving the carrier. The carrier 14 is held at the guide track 16 via the magnetic force that is active between the electromagnets 20 and the permanent magnet 22.

The carrier 14 comprises a carrier body 15 that mainly extends transversally to the guide axis Y between a first carrier end 14a and a second carrier end 14b. In operation the guide axis Y is oriented horizontally or almost horizontally and the carrier is oriented with the first carrier end 14a above the second carrier end 14b. The carrier 14 comprises a plurality of guiding elements 25a, 25b for mechanically guiding the carrier at the guide track 16. The carrier 14 comprises a first pair of guiding elements 25a positioned at the first end 14a and a second pair of guiding elements 25b are positioned at the second end 14b. The first guiding elements 25a are attached to the carrier 14 in a different manner from the second guiding elements 25b, as described in detail in the following.

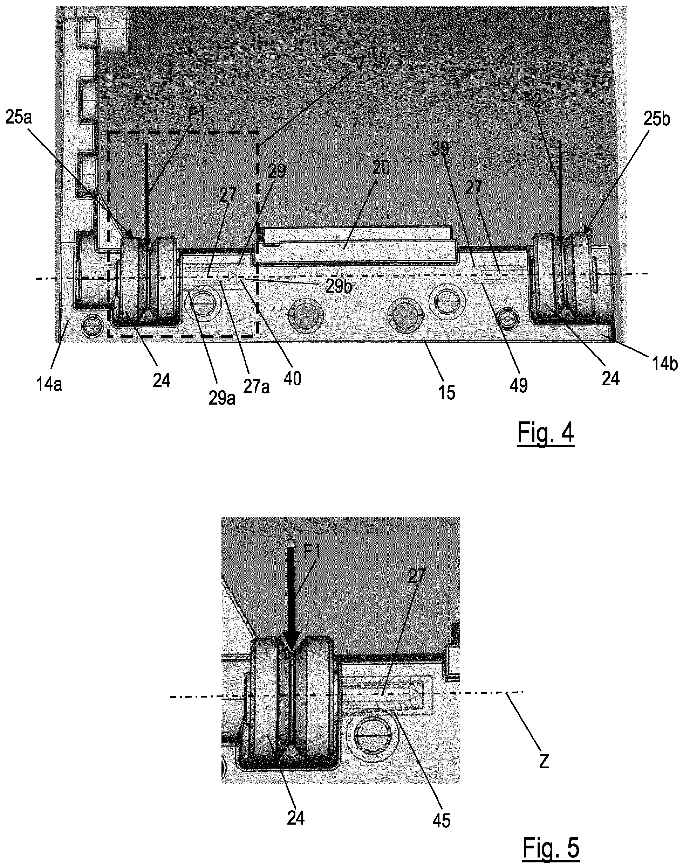

As shown in figs. 4 and 5, each guiding element 25a, 25b comprises a roller shaft 27 and a guide roller 24 rotatably attached to the roller shaft 27. The guide rollers 24 of the first guiding elements 25a are susceptible to rotate on a first guide rail 26a of the guide track 16. The guide rollers 24 of the second guiding elements 25b are susceptible to rotate on a second guide rail 26b of the guide track 16. The first and second guide rails 26a, 26b are provided as surfaces of the guide track 16 which are conjugated with the respective guide rollers 24 of the first and second guiding elements 25a, 25b, respectively. In the embodiment of the attached figures, the guide rollers 24 are provided with cylindrical grooves and the guide rails 25a, 26b are provided as protuberances respectively conjugated with the cylindrical grooves. Each of the guide rollers 24 of the first guiding elements 25a are mounted on the respective roller shaft 27, so that they are free to rotate about the roller shaft 27, but not movable with respect to a translation along the roller shaft 27. Each of the guide rollers 24 of the second guiding elements 25b are mounted on the respective roller shaft 27, so that they are free to rotate about the roller shaft 27 and free to move with respect to a translation along the roller shaft 27, so that the position of the guide roller 24 is adjustable along the respective roller shaft 27. The translational movement of the guide roller 24 improves the coupling with the respective guide rail 26b.

As a result of the magnetic force that is active between the electromagnets 20 and the permanent magnet 22, a first contact force F1 is generated between each of the first guiding elements 25a and the first guide rail 26a and a second contact force F2 is generated between each of the second guiding elements 25b and the first guide rail 26b. The magnetic force is equally distributed between the plurality of guiding elements 25, 25b, i.e., the contact forces F1 and F2 have the same values. Typical values of the total magnetic force active between the electromagnets 20 and the permanent magnet 22 are comprised between 300 N and 450 **N,** for example 380 N.

The carrier 14 comprises an insert 40 for attaching a corresponding guiding element 25a to a corresponding insert seat 29 provided in the carrier body 15. In the embodiment of the attached figs. 4 and 5, two insert seats 29 are provided at the at the first carrier end 14a. Each insert seat 29 is provided in the carrier body 15 as a cylindrical blind hole that comprises a cylindrical lateral surface 29a and a bottom surface 29b. The insert seat 29 extends along a seat axis Z that is orthogonal or almost orthogonal to the guide axis Y and orthogonal or almost orthogonal to the contact forces F1, F2.

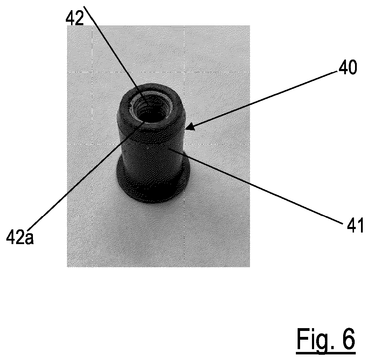

As shown in fig. 6, the insert 40 comprising an elastic element 41 for engaging the insert seat 29 and an insert fastener 42 for fixing the roller shaft 27 to the insert 40. The insert fastener 42 is provided as an inner portion of the insert 40 and the elastic element 41 is provided as an outer portion of the insert 40. The insert fastener 42 is configured as a metal barrel nut having an internal thread surface 42a. The insert fastener 42 has an outer surface on which the elastic element 41 is attached. The outer surface of the insert fastener 42 on which the elastic element 41 is provided include a lateral cylindrical portion and a base plane portion. The elastic element 41 comprises an elastomeric material or other similar materials having elastic or elastoplastic properties, for example natural or synthetic rubber. The elastic element 41 is configured in such a way that a maximum deflection in use of the elastic element 41 is less than 0,05 mm, preferably less than 0,02 mm.

According to another embodiment (not shown), the insert is provided as a one-piece elastomeric element, having an inner portion where the internal thread surface 42a is provided and an outer surface which is subject to coupling with the insert seat 29.

As shown in fig. 4, the elastic element 41 is pressed with interference inside the insert seat 29. The elastic element 41 contacts the lateral surface 29a and the bottom surface 29b of the insert seat 29. At an axial end of each roller shaft 27 a screw is provided with an external thread 27a for fixing the respective guiding elements 25a, 25b to the carrier body. The external thread 27a of each of the first guiding elements 25a is coupled with the internal thread surface 42a of the respective insert 40. The rotation axis of the guide roller 24 is aligned with the respective roller shaft 27 and with the axis of the thread 27a, so that, in operation, the seat axis Z is also aligned with the rotation axis of the guide roller 24.

As shown in fig. 5, as a result of the action of the first contact force F1, the insert fastener 42, to which the roller shaft 27 is coupled, is deflected to reach a deflected position indicatively represented by the dashed line 45. The elastic element 41 is deformed accordingly to provide a dumping effect for such a deflection. The dumping effect provided by the elastic element 41 of the insert 40 reduces or prevents tilting or vibrations of the carrier 14 moving along the guide track 16.

The carrier body 15 comprises two shaft seats 39 at the second carrier end 14b. Each shaft seat 39 comprises a body fastener 49 for fixing roller shaft 27 of at a respective guide element 25b directly to the carrier body. Each shaft seat 39 is provided in the carrier body 15 as a cylindrical blind hole having an inner thread that can be coupled with an external thread 27a of the roller shaft 27 of a respective guiding elements 25b. This allows to fix directly the roller shaft 27 of the respective guiding elements 25b to the carrier body 15. Each shaft seat 39 has an axis aligned or parallel to the seat axis Z. This mutual arrangement between the shaft seats 39 and the insert seat 29 allow the distance between the guide rollers 24 at the first carrier end 14a and at the second carrier end 14b to be adjusted in a direction transverse to the guide axis Y by means of an adjustment of the position of the guide rollers 24 at the second carrier end 14b along the respective roller shaft 27. The deformation of the elastic element 40 makes it possible to compensate for movements of the corresponding guide roller 24 at the first carrier end 14a in a direction orthogonal to the guide axis Y and orthogonal to the respective contact force F1, while the translation of the guide rollers 24 along the respective shaft 27 makes it possible to compensate for movements of the guide roller 24 at the second carrier end 14b in a direction orthogonal to the guide axis Y but parallel to the respective contact force F2. This can provide at the same time the required level of dampening of vibrations and the correct coupling between each roller 24 and the respective guide rail 26a, 26b.

In the embodiment of the attached figures, only the guiding elements 25a at the first carrier end 14a are attached to the carrier 14 with a respective insert 40 interposed between the roller shaft 27 and the carrier body 15. According to other embodiments (not shown) the carrier 14 may include a different number of guiding elements 25a, 25b and/or may be provided and/or a different location on the carrier body 15. For example, according to one embodiment, all the guiding elements 25a at both the first carrier end 14a and the second carrier end 14b are attached to the carrier 14 with a respective insert 40. According to other embodiments, a number of guiding elements 25a, 25b different from two are provided at the first carrier end 14a and/or the second carrier end 14b. According to further embodiments, one or more of the guiding elements 25a, 25b are attached to the carrier body 15 at other locations, different from the first carrier end 14a or the second carrier end 14b.

### REFERENCE SIGNS

Y: guide axis
10: transport system
12: linear motor
14: carrier
14a, 14b: carrier end
16: guide track
20: electromagnets
22: drive magnet
24: guide rollers
25a, 25b: guiding elements
26a, 26b: guide rails
27: roller shaft
27a: thread surface
28: position detection device
29: insert seat
29a: lateral surface
29b: bottom surface
39: shaft seat
40: insert
41: elastic element
42: insert fastener
42a: thread surface
45: deflected position
49: body fastener

## Claims

1. A linear motor system (10), comprising:
a guide track (16) comprising a plurality of electromagnets (22) distributed along the guide track (16);
at least one carrier (14) movable along the guide track (16), the at least one carrier (14) comprising:
a carrier body (15),
a drive magnet (20) attached to the carrier body (15) for cooperating with the electromagnets (22) of the guide track (16) to move the carrier (14) along the guide track (16),
at least a guiding element (25a, 25b) for mechanically guiding the carrier (14) along the guide track (16), the guiding element (25a, 25b) comprising a roller shaft (27) and a guide roller (24) rotatably attached to the roller shaft (27),
an insert (40) for attaching the guiding element (25a) to a corresponding insert seat (29) provided in the carrier body (15), the insert (40) comprising an elastic element (41) for engaging the insert seat (29) and an insert fastener (42) for fixing the roller shaft (27) to the insert (40).

2. The linear motor system (10) according to claim 2, wherein the elastic element (41) is configured in such a way that a maximum deflection in use of the elastic element (41) is less than 0,05 mm, preferably less than 0,02 mm.

3. The linear motor system (10) according to claim 1 or 2, wherein the elastic element (41) comprises an elastomeric material.

4. The linear motor system (10) according to any of the previous claims, wherein the insert fastener (42) is provided as an inner portion of the insert (40) and the elastic element (41) is provided as an outer portion of the insert (40).

5. The linear motor system (10) according to any of the previous claims, wherein the insert fastener (42) and the roller shaft (27) comprise respective mutually engageable thread surfaces (42a, 27a).

6. The linear motor system (10) according to any of the previous claims, wherein the insert seat (29) is provided as a hole in the carrier body (15), particularly as a blind hole.

7. The linear motor system (10) according to claim 6, wherein the elastic element (41) engages at least a lateral surface (29a) of the insert seat (29).

8. The linear motor system (10) according to claim 7, wherein the elastic element (41) engages a lateral surface (29a) and a bottom surface (29b) of the insert seat (29).

9. The linear motor system (10) according to any of the previous claims, wherein the insert seat (29) extends along a seat axis (Z) aligned with a rotation axis of the guide roller (24).

10. The linear motor system (10) according to any of the previous claims, wherein the at least one carrier (14) comprises a plurality of guiding elements (25a, 25b) and the carrier body (15) comprises at least a shaft seat (39), the shaft seat (39) comprising a respective body fastener (49) for fixing the roller shaft (27) of at least one guiding elements (25b) directly to the carrier body (15).

11. The linear motor system (10) according to any of the previous claims, the at least one carrier (14) comprises at least a first pair of guiding elements (25a) respectively attached to a pair of insert seats (29).

12. The linear motor system (10) according to claim 11, wherein the guide track (16) longitudinally extends along a guide axis (Y) and the carrier (14) mainly extends transversally to the guide axis (Y) between a first carrier end (14a) and a second carrier end (14b), the pair of insert seats (29) being provided at one of the first carrier end (14a) and the second carrier end (14b).

13. The linear motor system (10) according to claim 12, wherein the at least one carrier (14) comprises at least a second pair of guiding elements (25b) respectively attached to a pair of shaft seats (39), the pair of shaft seats (39) being provided at the other of the first carrier end (14a) and the second carrier end (14b).

14. The linear motor system (10) according to claim 13, wherein the pair of insert seats (29) are positioned above the pair of shaft seats (39) when the guide axis (Y) is horizontally disposed.

15. A carrier (14) for a linear motor system (10), the carrier (14) being configured for be mountable in the linear motor system (10) such that the carrier (14) is movable along a guide track (16) of the linear motor system (10), the carrier (14) comprising:
a carrier body (15),
a drive magnet (20) attached to the carrier body (15) for cooperating with electromagnets (22) provided along the guide track (16) to move the carrier (14) along the guide track (16),
at least a guiding element (25a, 25b) for mechanically guiding the carrier (14) along the guide track (16), the guiding element (25a, 25b) comprising a roller shaft (27) and a guide roller (24) rotatably attached to the roller shaft (27),
an insert (40) for attaching the guiding element (25) to a corresponding insert seat (29) provided in the carrier body (15), the insert (40) comprising an elastic element (41) for engaging the insert seat (29) and an insert fastener (42) for fixing the roller shaft (27) to the insert (40).
